# EUROPEAN PATENT APPLICATION

(11) **EP 3 090 667 A1**
(43) Date of publication of application: **09.11.2016**
(21) Application number: 14877205.6
(22) Date of filing: 31.12.2014
(51) Int. Cl.: A47J 43/046

(54) **A FOOD PROCESSOR WITH BOTTOM MOUNTED MIXER HAVING HEATING FUNCTION**

(30) Priority: 31.12.2013 CN 201320890752 U
(71) Applicant: Lee, Wen-Ching, Taichung City 408 (TW)
(72) Inventor: Lee, Wen-Ching, Taichung City 408 (TW)
(74) Representative: Becker Kurig Straus
(86) International application number: PCT/CN2014/001196
(87) International publication number: WO 2015/100709

(57) **Abstract**

A food processor includes a base (1), a bottom cover (2), a blending motor (3), an electromagnetic heating coil (4), a stainless steel container (5), a blending cutter unit (6) and a driving connector (31). The base (1) comprising a recess portion (11), the recess portion (11) disposed above the base (1). The blending motor (3) mounted in the base (1).. The electromagnetic heating coil (4) disposed in the base (1) and around the recess portion (11). The stainless steel container (5) disposed in the recess portion (11). The driving connector (31) connected to a shaft of the blending motor (3) to penetrate a through hole (110) of the recess portion (11) so as to be disposed in the recess portion (11). The blending cutter unit (6) mounted on a bottom portion of the stainless steel container (5) and comprises a driven connector (61). The driven connector (61) meshing with the driving connector (31).

## Description

### BACKGROUND OF THE INVENTION

### 1. Field of the Invention

The invention relates to the technical field of kitchen equipment and, more particularly, to a food processor with mixing and heating functions.

### 2. Description of Related Art

Conventional food processors with heating function, such as family-style soy milk makers, effectuate heating by a heating tube or a heating disk and have disadvantages, including low heat efficiency and taking much time to reach a required temperature. By contrast, some food processors use an electromagnetic heating coil to effectuate heating, as disclosed in China's utility model patent application 200620011950.5 which relates to a fully automated soy milk maker. However, this food processor has disadvantages as follows: an electromagnetic heating coil, a heating tube or a heating disk is disposed at the bottom of the food processor; a blending container is integrally connected to the bottom of the food processor; a blending head is disposed on a lid of the food processor; the lid and a base are not only heavy and bulky but also lack ease of use; and pouring soy milk or juice out of the blending container can be a laborious task.

### SUMMARY OF THE INVENTION

In view of the aforesaid drawbacks of the prior art, it is an objective of the invention to provide a food processor with mixing and heating functions.

In order to achieve the above and other objectives, the invention provides a food processor with mixing and heating functions. The food processor comprises a base, a bottom cover, a blending motor, electromagnetic heating coil, a stainless steel container, a driving connector and a blending cutter unit, the base comprising a recess portion, the recess portion disposed above the base, the blending motor mounted in the base, the electromagnetic heating coil disposed in the base, and around the recess portion, the stainless steel container disposed in the recess portion, the driving connector connected to an output shaft of the blending motor to penetrate a bottom through hole of the recess portion so as to be disposed in the recess portion; and the blending cutter unit mounted on a bottom portion of the stainless steel container and comprises a driven connector. The driven connector meshing with the driving connector.

An extension wall is extended from the bottom portion of the stainless steel container and extended toward a bottom direction of the bottom portion of the stainless steel container, wherein the driven connector and the driving connector are disposed in the extension wall.

A transparent window is disposed on the upper sidewall of the stainless steel container.

A lid is disposed on top of the stainless steel container.

The food processor with a bottom mounted mixer having heating function according to the invention is characterized in that: a bottom mounted mixer and an electromagnetic heating coil effectuate heating; a blending head, a heating mechanism and a base are coupled together to render the overall structure tight-fitting and compact; a blending container, that is, a stainless steel container, is separably mounted on the base to therefore reduce the weight of the blending container greatly; the stainless steel container is directly taken out to pour out its contents; hence, it is more convenient and takes less effort to operate the food processor with a bottom mounted mixer having heating function according to the invention.

### BRIEF DESCRIPTION OF THE DRAWINGS

FIG. 1 is a partial cross-sectional view of a food processor according to the invention.
FIG. 2 is an exploded view of the food processor according to the invention.

### DETAILED DESCRIPTION OF THE PREFERRED EMBODIMENTS

The invention is illustrated with an embodiment, depicted with accompanying drawings, and described below.

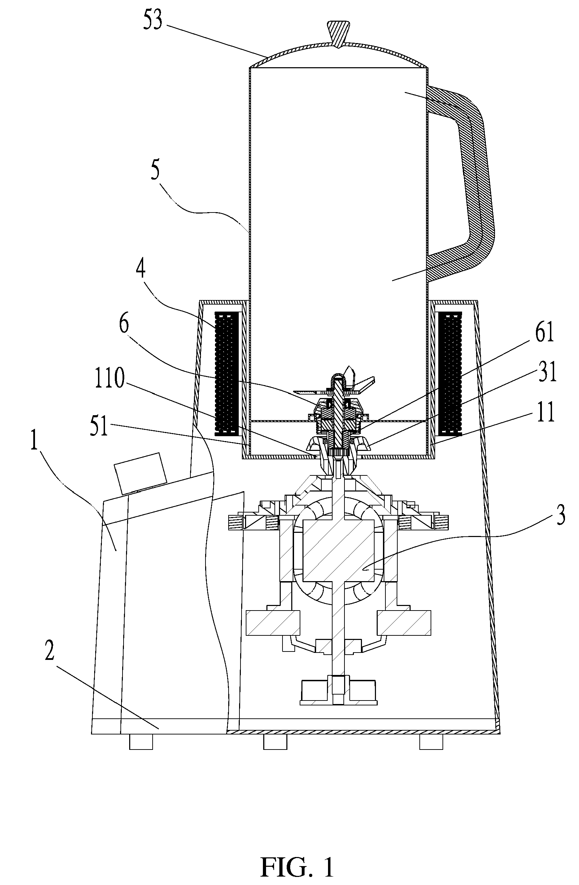

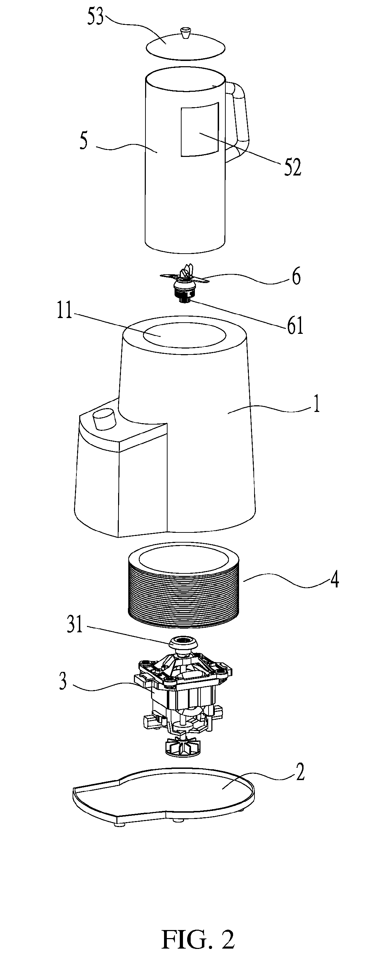

Referring to FIG. 1 and FIG. 2, the invention provides a food processor with mixing and heating functions. The food processor comprises a base 1, a bottom cover 2, a blending motor 3, an electromagnetic heating coil 4, a stainless steel container 5 and a blending cutter unit 6. The base 1 comprises a recess portion 11. The recess portion 11 is disposed above the base 1. The blending motor 3 is mounted in the base 1. The electromagnetic heating coil 4 is disposed in the base 1 and around the recess portion 11. The stainless steel container 5 is disposed in the recess portion 11. The driving connector 31 is connected to an output shaft of the blending motor 3. The driving rotor 31 penetrates a bottom through hole 110 of the recess portion 11 so as to be disposed in the recess portion 11. The blending cutter unit 6 is mounted on a bottom portion of the stainless steel container 5. The blending cutter unit 6 penetrates in a hermetically sealed manner the bottom portion of the stainless steel container 5. The blending cutter unit 6 comprises a driven connector 61. The driven connector 61 meshes with the driving rotor 31.

The operation of the food processor is described below. The output shaft of the blending motor 3 drives the driving connector 31 so that the driving connector 31 drives the driven connector 61. The driven connector 61 drives cutters of the blending cutter unit 6 to rotate, thereby allowing a blending and grinding process to take place in the stainless steel container 5. The electromagnetic heating coil 4 disposed around the recess portion 11 heats the stainless steel container 5 by induction heating, thereby heating up a blended liquid, such as soy milk or juice, in the stainless steel container 5.

An extension wall 51 is extended to the bottom portion of the stainless steel container 5 and extended toward the bottom direction of the bottom portion of the stainless steel container. An end of the extension wall is to go beyond the bottom surface thereof. The extension wall and the bottom portion of the stainless steel container 5 forms a space 510 for receiving the driven connector 61 and the driving connector 31 in the recess portion 11. Since the extension wall 51 is contacting with the bottom of the recess portion 11. The extension wall 51 bears the weight of the stainless steel container 5 to prevent the weight of the stainless steel container 5 from being entirely born by the driven connector 61 and the driving connector 31, thereby allowing the driven connector 61 and the driving connector 31 to rotate freely.

A transparent window 52 is disposed on the upper sidewall of the stainless steel container 5. A user watches the blended substance in the stainless steel container 5 through the transparent window 52 for timing. A lid 53 is disposed on top of the stainless steel container 5.

The food processor with a bottom mounted mixer having heating function according to the invention is characterized in that: a bottom mounted mixer and an electromagnetic heating coil effectuate heating; a blending head, a heating mechanism and a base are coupled together to render the overall structure tight-fitting and compact; a blending container, that is, a stainless steel container, is separably mounted on the base to therefore reduce the weight of the blending container greatly; the stainless steel container is directly taken out to pour out its contents; hence, it is more convenient and takes less effort to operate the food processor with a bottom mounted mixer having heating function according to the invention.

## Claims

1.A food processor with mixing and heating functions, the food processor **characterized in that**: a base (1), a bottom cover (2), a blending motor (3), an electromagnetic heating coil (4), a stainless steel container (5), a blending cutter unit (6) and a driving connector (31), the base (1) comprising a recess portion (11), the recess portion (11) disposed above the base (1), the blending motor (3) mounted in the base (1), the electromagnetic heating coil (4) disposed in the base (1), and around the recess portion (11), the stainless steel container (5) disposed in the recess portion (11), the driving connector (31) connected to a shaft of the blending motor (3) to penetrate a bottom through hole (110) of the recess portion (11) so as to be disposed in the recess portion (11); and the blending cutter unit (6) mounted on a bottom portion of the stainless steel container (5) and having a driven connector (61), the driven connector (61) meshing with the driving connector (31).

2. The food processor with mixing and heating functions of claim 1, **characterized in that**: an extension wall (51) is extended from the bottom portion of the stainless steel container (5) and extended toward a bottom direction of the bottom portion of the stainless steel container (5), wherein the driven connector (61) and the driving connector (31) are disposed in the extension wall (51).

3. The food processor with mixing and heating function of claim 1 or 2, **characterized in that** a transparent window (52) is disposed on an upper sidewall of the stainless steel container (5).

4. The food processor with mixing and heating functions of claim 3, **characterized in that** a lid (53) is disposed on top of the stainless steel container (5).
